Europäisches Patentamt

European Patent Office

Office européen des brevets

(19)

(11) Veröffentlichungsnummer: **0 058 775**
**B1**

(12) # EUROPÄISCHE PATENTSCHRIFT

(45) Veröffentlichungstag der Patentschrift:
11.09.85

(51) Int. Cl.⁴: **B 27 B 5/20**

(21) Anmeldenummer: **81110469.4**

(22) Anmeldetag: **16.12.81**

(54) **Kombinierte Tisch- und Gehrungssäge.**

(30) Priorität: **19.02.81 DE 3106098**

(43) Veröffentlichungstag der Anmeldung:
**01.09.82 Patentblatt 82/35**

(45) Bekanntmachung des Hinweises auf die Patenterteilung:
**11.09.85 Patentblatt 85/37**

(84) Benannte Vertragsstaaten:
**AT BE CH DE FR GB IT LI LU NL SE**

(56) Entgegenhaltungen:
**GB - A - 591 212**

(73) Patentinhaber: **Eugen Lutz GmbH & Co.
Maschinenfabrik, Pinacher Strasse,
D-7130 Mühlacker-Lomersheim (DE)**

(84) Benannte Vertragsstaaten: **DE**

(73) Patentinhaber: **Black & Decker Overseas AG,
Staedtle 36, FL-9490 Vaduz (LI)**

(84) Benannte Vertragsstaaten: **BE CH FR GB IT LI LU NL SE
AT**

(72) Erfinder: **Bergler, Otto, Jahnstrasse 18/1,
D-7130 Mühlacker-Lomersheim (DE)**

(74) Vertreter: **Wilhelm, Hans-Herbert, Dr.-Ing. et al,
Patentanwälte Dr.-Ing. Hans-Herbert Wilhelm Dipl.-Ing.
Hanjörg Dauster Gymnasiumstrasse 31B,
D-7000 Stuttgart 1 (DE)**

EP 0 058 775 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine kombinierte Tisch- und Gehrungssäge mit einer um 180° wendbaren, mit einem Schlitz versehenen und beidseitig mit Arbeitsflächen ausgebildeten Grundplatte, auf der einseitig ein motorgetriebenes Sägeaggregat mit einem Sägeblatt schwenkbar gelagert ist, das zum Gehrungssägen in den Schlitz herein und zum Tischsägen durch den Schlitz hindurchführbar ist, wobei zum Tischsägen als Feststelleinrichtung für das Sägeaggregat eine in ihrer Länge verstellbare und am Sägeaggregat angreifende Gewindespindel vorgesehen ist, die aus mindestens einer ihrer Lagerstellen herausnehmbar ist.

Kombinierte Tisch- und Gehrungssägen dieser Art sind bekannt (DE-PS 1 628 992). Diese bekannten Bauarten sind wegen ihrer vielseitigen Einsatzmöglichkeiten sehr vorteilhaft. Die bei Gehrungssägen anderer Art (DE-PS 2 133 308) oder bei Tischsägen (AT-PS 257 904) bekannten Einstellmöglichkeiten, durch die durch Schrägschnitte, d. h. Schnitte, die unter einem Winkel zu der Auflagefläche der Werkstücke verlaufen, durchgeführt werden können, lassen sich jedoch bei den bekannten kombinierten Tisch- und Gehrungssägen der eingangs genannten Art nicht verwirklichen, weil die in der Stellung als Tischsäge notwendige Gewindespindel sich dort an der Grundplatte abstützt. Da es für Schrägschnitte wegen der einzuhaltenden Genauigkeit notwendig ist, daß die Schwenkachse für das Sägeaggregat in diesem Fall in der Werkstückauflagefläche verläuft, läßt sich die ebenfalls erforderliche Abstützung durch die Gewindespindel nicht aufrechterhalten. Die bekannten Bauarten der eingangs genannten kombinierten Tisch- und Gehrungssägen sehen daher die Möglichkeit einer Verschwenkung um eine parallel zu dem Schlitz der Grundplatte verlaufende Achse nicht vor.

Der vorliegenden Erfindung liegt die Aufgabe zugrunde, kombinierte Tisch- und Gehrungssägen der eingangs genannten Bauart so auszubilden, daß ohne großen Bauaufwand auch eine Verschwenkung des Sägeaggregates zu der durch den Schlitz in der Grundplatte senkrecht stehenden Ebene möglich ist.

Das wird dadurch erreicht, daß die Schwenklagerung für das Sägeaggregat in einer senkrecht zu der ersten Schwenkachse verlaufenden, kreisförmig ausgebildeten Kulissenführung gelagert ist, deren Mittelpunkt in der Arbeitsebene der Grundplatte liegt und daß die Gewindespindel auf der dem Sägeaggregat abgewandten Seite in einem Lagerbock gehalten ist, der als Teil der Schwenklagerung für das Sägeaggregat ausgebildet ist. Durch diese Ausgestaltung, bei der die Gewindespindel nicht mehr an der Grundplatte gehalten ist, läßt sich die verschwenkbare Anordnung des gesamten Sägeaggregates in einer Kulissenführung ohne Schwierigkeiten verwirklichen. Das neue kombinierte Tisch- und Gehrungssägenaggregat weist daher den Vorteil auf, daß zusätzlich zu Kapp- und Gehrungsschnitten und zusätzlich zu den Möglichkeiten des Tischsägens in beiden Einsatzgebieten auch noch Schrägschnitte möglich sind, die den Einsatzbereich der neuen Tisch- und Gehrungssäge erweitern.

Vorteilhaft ist es, wenn der Lagerbock für die Gewindespindel als eine auf der dem Sägeblatt gegenüberliegenden Seite der ersten Schwenkachse nach hinten abragende Lagergabel ausgebildet ist. Diese Lagergabel kann in sehr einfacher Weise aus einem Stück mit dem die Schwenklagerung bildenden Teil des Sägeaggregates bestehen.

Bei der neuen Ausführungsform muß darauf geachtet werden, daß alle Teile des Sägeaggregates einschließlich des Antriebmotors so ausgebildet sind, daß auch bei einer Schrägstellung des Sägeblattes zu der senkrecht zu der Grundplatte durch den Schlitz verlaufenden Ebene ein Wenden der Grundplatte um 180° möglich ist. Es hat sich gezeigt, daß dies verhältnismäßig einfach verwirklicht werden kann, wenn die Schrägstellung des Sägeaggregates bis zu einem maximalen Winkel von 45° zu der senkrecht zu der Grundplatte bestehenden Ebene ermöglicht wird. Auch die dann über den Winkel von 90° verlaufende Kulissenführung läßt sich sehr einfach herstellen.

In der Zeichnung ist ein Ausführungsbeispiel der neuen Tisch- und Gehrungssäge dargestellt und in der nachfolgenden Beschreibung erläutert. Es zeigt

Fig. 1 eine schematische Seitenansicht der neuen Tisch- und Gehrungssäge in der Stellung zum Gehrungssägen,

Fig. 2 die Ansicht der Tisch- und Gehrungssäge der Fig. 1 in Richtung des Pfeiles II,

Fig. 3 die Draufsicht auf die Säge der Fig. 1 und 2 und

Fig. 4 in vergrößertem Maßstab die teilweise aufgeschnittene Ansicht der auf der Grundplatte angeordneten Kulissenführung für die Schwenklagerung mit dem an der Schwenklagerung angebrachten Lagerbock für die Gewindespindel.

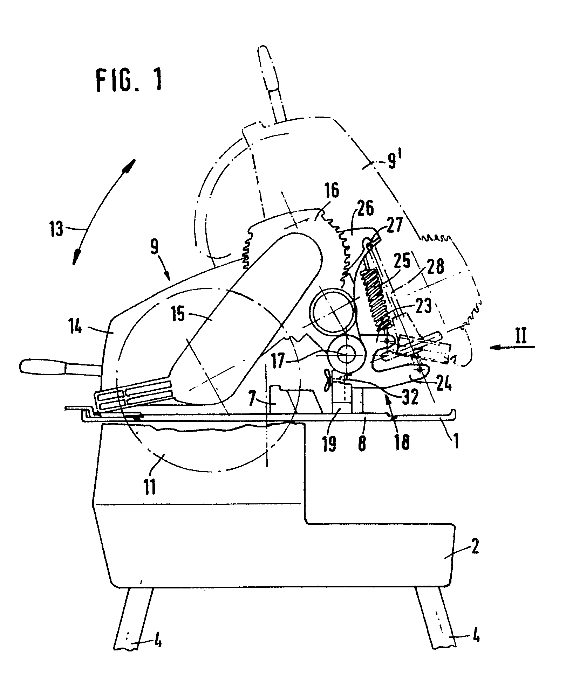

In den Fig. 1 bis 3 ist eine als Werkstücktisch dienende Grundplatte 1 schwenkbar in zwei seitlichen Traggestellwänden 2 und 3 gelagert, die durch Stützfüße 4 nach unten verlängert sind, so daß die Grundplatte 1 in Höhe einer normalen Tischplatte zu liegen kommen kann. Die beiden Seitenwangen 2 und 3 sind aus Stabilitätsgründen untereinander mit Versteifungsstangen 5 verbunden.

Die Grundplatte 1 ist in an sich bekannter Weise mit seitlichen Lagerzapfen 6 in den Seitenwangen 2 und 3 gelagert, die in eine Anschlagleiste 7 übergeht, welche quer über die Grundplatte 1 verläuft.

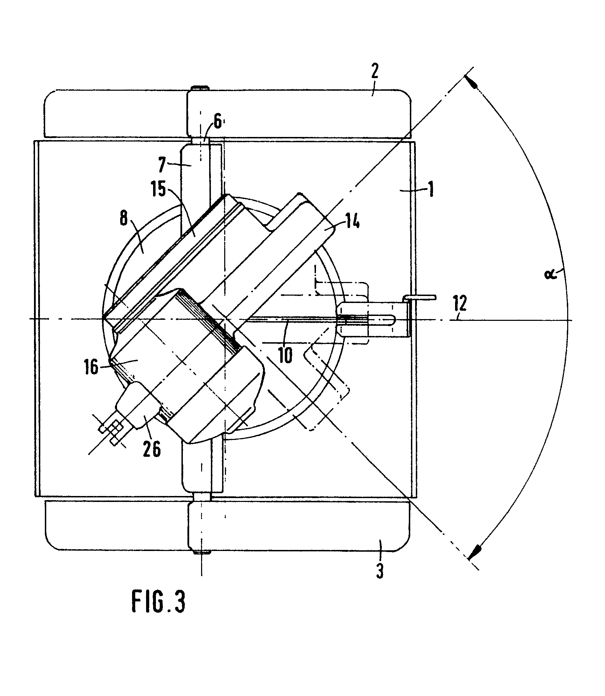

In der Grundplatte 1 ist drehbar ein Rundtisch 8 gelagert, auf dem das eigentliche Sägeaggregat 9 gelagert ist. Wie aus Fig. 3 hervorgeht, kann der Schnittwinkel durch die Verdrehbarkeit des Rundtisches 8 in einer Horizontalebene, d. h. in einer Ebene parallel zu der Grundplatte 1 um einen Winkel $\alpha$ von 90° verstellt werden, wobei ausgehend von einer senkrecht durch die Mitte der Grundplatte 1 und damit auch durch den Eintauchschlitz 10 für das Sägeblatt 11 verlaufenden Ebene 12 nach beiden Seiten — siehe Fig. 3 — eine Winkelverstellung um 45° möglich ist.

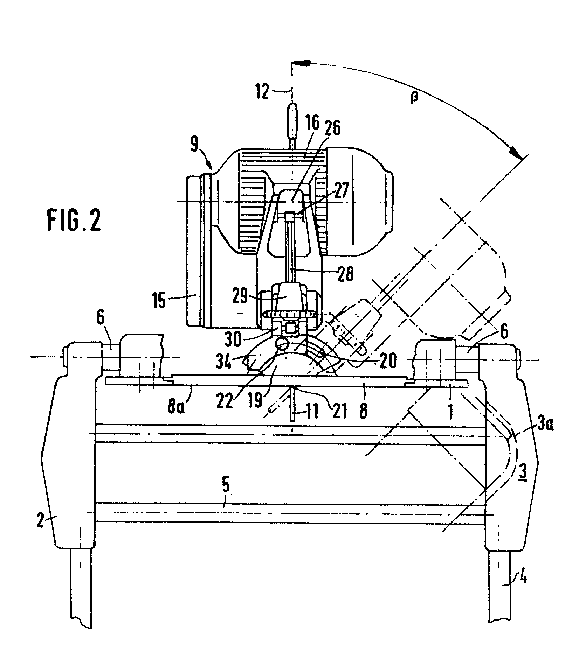

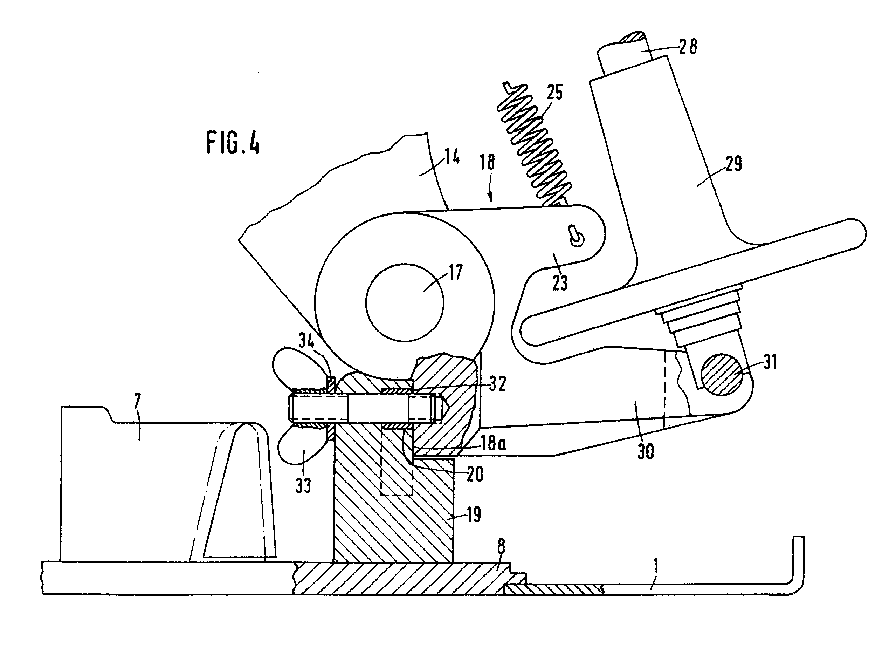

Wie aus Fig. 1 hervorgeht, ist das Sägeaggregat 9 in ebenfalls bekannter Weise schwenkbar im Sinne des Pfeiles 13 angeordnet, damit ausgehend von der strichpunktierten Lage 9' Gehrungs- oder Kappschnitte durchgeführt werden können, indem das Sägeblatt 11 von oben auf das nicht dargestellte und an der Anschlagleiste 7 gehaltene Werkstück heruntergeführt wird. Zu diesem Zweck ist das Sägeblatt 11 des Sägeaggregates zusammen mit einer das Sägeblatt oben überdeckenden Haube 14 zusammen mit dem Antriebsriementrieb, der unter einer Abdeckung 15 liegt und dem Antriebsmotor 16 schwenkbar um die Achse 17 gelagert, die ihrerseits Teil einer Schwenklagerung 18 ist, die in noch näher zu erläuternder Weise fest mit dem Rundtisch 8 verbunden ist. Die Schwenklagerung 18 besteht beim Ausführungsbeispiel dabei — siehe Fig. 4 — aus einer fest mit dem Rundtisch 8 verbundenen Kulissenführung 19, die mit einem aus Fig. 2 ersichtlichen kreisbogenförmigen Schlitz 20 versehen ist, der über einen Winkel von 90° verläuft und seinen Mittelpunkt auf der gedachten Achse 21 hat, die der aus der Fig. 2 erkennbaren Schnittkante zwischen der unteren Werkstückauflagefläche 8a der Grundplatte 8 und der Ebene entspricht, in der das Sägeblatt liegt. Diese Lage des Mittelpunktes für die Kulissenführung 19, 20 ist notwendig, wenn in der Stellung zum Tischsägen Schrägschnitte gemacht werden sollen.

In dem Schlitz 20 ist ein Gleitstein 32 geführt, der einteilig an der Schwenklagerung 18 angeordnet ist, die außerdem aus den beiden auf der vom Sägeblatt 11 abgewandten Seite der Schwenkachse 17 liegenden Armen 23 und 24 besteht, von denen der obere Arm 23 die Rückzugsfeder 25 für das um die Achse 17 schwenkbar gelagerte Sägeaggregat 9 hält, die mit ihrem anderen Ende an dem Schwenkarm 26 des Sägegehäuses 14, 15, 16 eingehängt ist. An diesem Schwenkarm 26 des Sägegehäuses ist auch eine Lagerstelle 27 vorgesehen, in welche ein quer zu einer Gewindespindel 28 (Fig. 2) verlaufender Bolzen einlegbar ist, wenn die Säge zum Zweck des Abschwenkens in die Tischsägenstellung für diesen Schwenkvorgang vorbereitet wird. Aus Fig. 2 ist zu erkennen, daß die Gewindespindel 28 an ihrem unteren Ende mit einem Handrad 29 versehen ist, mit dessen Hilfe die Länge der Gewindespindel 28 verstellbar ist. Die Gewindespindel selbst ist mit ihrem unteren Ende in einen Lagerbock 30 eingesetzt, der gabelförmig ausgebildet ist und, wie aus Fig. 4 ersichtlich ist, ebenfalls einen Querbolzen der Gewindespindel 28 aufnimmt. Der Lagerbock 24 sowie der Arm 23 und der Gleitstein 32 der Schwenklagerung 18 sind einstückig ausgeführt. Durch den Schlitz 20 in der Kulisse 19 greift eine Klemmschraube 33 durch, mit deren Hilfe Reibungsschluß zwischen der Anlagefläche 18a der Schwenklagerung und der entsprechenden Gegenfläche der Kulisse 19 erzeugt werden kann, so daß die Lage der Schwenklagerung 18 relativ zu der Kulisse 19 durch Betätigen der Flügelschraube 33 gesichert werden kann. Wie aus Fig. 2 hervorgeht, läßt sich auf diese Weise das Sägeaggregat 9 um einen Winkel $\beta$ von 45° nach einer Seite verschwenken. Nach der anderen Seite wird eine Verschwenkung beim Ausführungsbeispiel verhindert dadurch, daß die Schwenklagerung 18 mit einem entsprechenden Anschlagfortsatz 34 ausgebildet ist. Selbstverständlich wäre es auch möglich, die Verschwenkung nach der anderen Seite vorzunehmen, wenn dafür gesorgt wird, daß das Antriebsgehäuse 15 und andere Teile des Sägeaggregates 9 nicht soweit nach außen geschwenkt werden, daß sie ein Wenden der Grundplatte 1 um 180° unmöglich machen.

Beim Ausführungsbeispiel ist nur ein Schwenken nach einer Seite möglich. Dieser Schwenkvorgang um den Winkel $\beta$ bis zu 45° reicht aus, um Schrägschnitte durchführen zu können. Die Wange 3 ist dabei auf ihrer Innenseite so ausgenommen, (siehe Ausnehmung 3a — Fig. 2), daß der Motor 16 in der extremen Schräglage zusammen mit der Grundplatte noch nach unten durchgeschwenkt werden kann.

Die neue Ausführung erlaubt somit zusätzlich zu den bisher schon bekannten Schnittwinkeleinstellungen um den Winkel $\alpha$ auch noch Schnittwinkeleinstellungen um den Winkel $\beta$ schräg zu der senkrecht zur Grundplatte stehenden und durch den Schlitz 10 verlaufenden Ebene 12. Es kommt dabei durch die gewählte Ausführung nicht mehr darauf an, daß die Schwenkachse der Gewindespindel 28 mit der Schwenkachse 21 für das Sägeblatt 11 zusammenfällt, weil nun die Abstützung des Sägeaggregates 9 in der Stellung Tischsägen unmittelbar an der Schwenklagerung 18 erfolgt, die als Ganzes in der Kulissenführung 19 verschwenkbar gehalten ist.

**Patentansprüche**

1. Kombinierte Tisch- und Gehrungssäge mit einer um 180° wendbaren, mit einem Schlitz versehenen und beidseitig mit Arbeitsflächen ausgebildeten Grundplatte (1), auf der einseitig ein motorgetriebenes Sägeaggregat (9) mit einem Sägeblatt (11) schwenkbar gelagert ist, das zum Gehrungssägen in den Schlitz (10) herein und zum Tischsägen durch den Schlitz hindurchführbar ist, wobei zum Tischsägen als Feststelleinrichtung für das Sägeaggregat eine in ihrer Länge verstellbare und am Sägeaggregat angreifende Gewindespindel (28) vorgesehen ist, die aus mindestens einer ihrer Lagerstellen herausnehmbar ist, dadurch gekennzeichnet, daß die Schwenklagerung (18) für das Sägeaggregat (9) in einer senkrecht zu der ersten Schwenkachse (17) verlaufenden kreisförmig ausgebildeten Kulissenführung (19, 20) gelagert ist, deren Mittelpunkt (21) in der für das Tischsägen vorgesehenen Arbeitsebene (8a) der Grundplatte (1) liegt und daß die Gewindespindel (28) auf der dem Sägeaggregat (9) abgewandten Seite in einem Lagerbock (30) gehalten ist, der als Teil der Schwenklagerung (18) für das Sägeaggregat ausgebildet ist.

2. Kombinierte Tisch- und Gehrungssäge nach Anspruch 1, dadurch gekennzeichnet, daß der Lagerbock (30) für die Gewindespindel (28) als eine auf der dem Sägeblatt (11) gegenüberliegenden Seite der ersten Schwenkachse (17) nach hinten abragende Lagergabel ausgebildet ist.

3. Kombinierte Tisch- und Gehrungssäge nach den Ansprüchen 1 und 2, dadurch gekennzeichnet, daß die Lagergabel aus einem Stück mit dem die Schwenklagerung (18) bildenden Teil des Sägeaggregates (9) besteht.

4. Kombinierte Tisch- und Gehrungssäge nach den Ansprüchen 1 bis 3, dadurch gekennzeichnet, daß alle Teile des Sägeaggregates (9), einschließlich des Antriebsmotors (16) so ausgebildet und dimensioniert sind, daß auch bei Schrägstellung des Sägeblattes (11) zu der senkrecht zu der Grundplatte (1) durch den Schlitz (10) verlaufenden Ebene (12) ein Wenden der Grundplatte (1) um 180° möglich ist.

5. Kombinierte Tisch- und Gehrungssäge nach Anspruch 1, dadurch gekennzeichnet, daß der Schlitz (20) der Kulissenführung (19) über einen Winkel von mindestens 45° von der durch den Schlitz (10) verlaufenden senkrechten Ebene (12) aus nach einer Seite verläuft.

## Claims

1. Combined table and mitreing saw with a baseplate 1 adapted to be turned through 180°, provided with a lot and constructed with working surfaces on both sides and on which there is pivotally mounted on one side a motor driven saw unit having a saw blade which for sawing mitres can be guided into the slot and for table sawing can be guided through the slot, whereby for table sawing the locking means for the sawing unit is a threaded spindle which is adjustable in length and which engages the saw unit and which can be removed from at least one of its bearing points, characterized in that the pivot mounting (18) for the sawing unit (9) is mounted in a circularly constructed slideway (19, 20) extending at a right-angle to the first pivoting axis (17) and of which the centre point (21) lies in that working plane (8a) of the baseplate (1) which is provided for table sawing and in that on the side remote from the sawing unit (9), the threaded spindle (28) is supported in a bearing block (30) which is constructed as a part of the pivot mounting (18) of the sawing unit.

2. Combined table and mitreing saw according to claim 1, characterized in that the bearing block (30) for the threaded spindle (28) is constructed as a bearing fork which projects to the rear on the side of the first pivot spindle (17) which is opposite the saw blade (11).

3. Combined table and mitreing saw according to claims 1 and 2, characterized in that the bearing fork consists of one piece with the part of the sawing unit (9) which forms the pivot mounting (18).

4. Combined table and mitreing saw according to claims 1 to 3, characterized in that all parts of the sawing unit (9), including the drive motor (16), are so constructed and dimensioned that even with the saw blade (11) inclined obliquely to the plane (12) extending through the slot (10) and at a right-angle to the baseplate (1), turning of the baseplate (1) through 180° is possible.

5. Combined table and mitreing saw according to claim 1, characterized in that the slot (20) of the slideway (19) extends to one side through an angle of at least 45° from the vertical plane (12) extending through the slot (10).

## Revendications

1. Scie combinée d'établi et à onglet, avec un plateau, tournant de 180°, muni d'une fente et présentant des deux côtés des surfaces de travail, sur lequel est posé, d'un côté, avec possibilité de pivotement, un groupe de sciage motorisé (9) avec une lame de scie (11), que l'on peut guider dans la fente (10) pour scier d'onglet et à travers la rainure pour scier en scie d'établi, étant précisé que pour l'utilisation en scie d'établi, il est prévu comme dispositif de fixation pour le groupe de sciage une broche filetée (28), de longueur réglable, attaquant le groupe de sciage et que l'on peut sortir d'au moins l'une de ses portées, caractérisée en ce que le support de pivotement (18) du groupe de sciage (9) est repris dans un guidage à coulisse (19, 20) en forme d'arc de cercle, courant perpendiculairement au premier axe de pivotement (17) et dont le point médian (21) se trouve dans le plan de travail (8a) du plateau (1) prévu pour scier en scie d'établi; et en ce que la broche filetée (28) est maintenue, du côté opposé au groupe de sciage (9), dans un support (30) conçu comme faisant partie du support de pivotement (18) du groupe de sciage.

2. Scie combinée d'établi et à onglet selon la revendication 1, caractérisée en ce que le support (30) de la broche filetée (28) est conçu comme chape se détachant, vers l'arrière, sur le côté, opposé à la lame de scie (11), du premier axe de pivotement (17).

3. Scie combinée d'établi et à onglet selon les revendications 1 et 2, caractérisée en ce que la chape est venue d'une pièce avec la partie du bloc de sciage (9) qui constitue le support de pivotement (18).

4. Scie combinée d'établi et à onglet selon les revendications 1 à 3, caractérisée en ce que toutes les pièces du groupe de sciage (9), y compris le moteur d'entrainement (16), sont conçues et dimensionnées de façon que, même en position oblique de la lame de scie (11) par rapport au plan (12) perpendiculaire en plateau (1) et passant par la fente (10), il soit possible de faire tourner le plateau 1 de 180°.

5. Scie combinée d'établi et à onglet selon la revendication 1, caractérisée en ce que la fente (20) du guidage à coulisse (19) court d'un côté sur un angle d'au moins 45° avec le plan vertical (12) passant par la fente (10).

FIG. 1

FIG.2

FIG.3

11

FIG.4

0 058 775